# EUROPÄISCHE PATENTSCHRIFT

(11) **EP 3 903 089 B1**
(45) Veröffentlichungstag und Bekanntmachung des Hinweises auf die Patenterteilung: **21.09.2022**
(21) Anmeldenummer: 19801545.5
(22) Anmeldetag: 08.11.2019
(51) Int. Cl.: B03C 3/017, B03C 3/06, B03C 3/08, B03C 3/41, B03C 3/49, B03C 3/47, G01N 15/06, G01N 1/22, G01N 15/00, G01N 27/60

(54) **PARTIKELSENSOR UND BETRIEBSVERFAHREN HIERFÜR**
PARTICLE SENSOR AND METHOD FOR OPERATING SAME
CAPTEUR DE PARTICULES ET PROCÉDÉ POUR LE FAIRE FONCTIONNER

(30) Priorität: 28.12.2018 DE 102018251793
(43) Veröffentlichungstag der Anmeldung: 03.11.2021
(73) Patentinhaber: Robert Bosch GmbH, 70442 Stuttgart (DE)
(72) Erfinder: RUSANOV, Radoslav, 70499 Stuttgart (DE)
(86) Internationale Anmeldenummer: PCT/EP2019/080679
(87) Internationale Veröffentlichungsnummer: WO 2020/135944

(56) Entgegenhaltungen:
- EP-A1- 2 860 510
- DE-A1- 10 242 301

## Beschreibung

### Stand der Technik

Die Offenbarung betrifft einen Partikelsensor mit einer Partikelaufladeeinrichtung zum Aufladen von Partikeln in einem Fluidstrom.

Die Offenbarung betrifft ferner ein Verfahren zum Betreiben eines derartigen Partikelsensors.

Aus dem Stand der Technik, zum Beispiel der DE 102 42 301 A1 und der EP 2 860 510 A1 sind bereits Partikelsensoren und Verfahren zu ihrem Betrieb bekannt.

### Offenbarung der Erfindung

Bevorzugte Ausführungsformen beziehen sich auf einen Partikelsensor mit einer Partikelaufladeeinrichtung zum Aufladen von Partikeln in einem Fluidstrom, und mit einer Sensoreinrichtung zur Erfassung eines zeitlichen Verlaufs eines Sensorsignals, das Informationen über aufgeladene Partikel in dem Fluidstrom aufweist, wobei der Partikelsensor dazu ausgebildet ist, ein Auswertungszeitfenster in Abhängigkeit wenigstens einer eine Geschwindigkeit des Fluidstroms charakterisierenden ersten Größe zu ermitteln und den zeitlichen Verlauf des Sensorsignals wenigstens in einem durch das Auswertungszeitfenster charakterisierten Zeitbereich auszuwerten. Dadurch kann eine Präzision bei der Auswertung gesteigert werden und insbesondere ein Signal-zu-Rausch-Verhältnis (SNR) vergrößert werden. Insbesondere kann dadurch auch der Messbereich des Partikelsensors erweitert werden, so dass kleinere Konzentrationen von (geladenen) Partikeln gemessen werden können.

Bei weiteren bevorzugten Ausführungsformen ist vorgesehen, dass der zeitliche Verlauf des Sensorsignals nur in dem durch das Auswertungszeitfenster charakterisierten Zeitbereich ausgewertet wird.

Beispielsweise kann es sich bei dem Fluidstrom um einen Abgasstrom einer Brennkraftmaschine eines Kraftfahrzeugs handeln. Beispielsweise kann es sich bei den Partikeln um Rußpartikel handeln, wie sie im Rahmen einer Verbrennung von Kraftstoff durch eine Brennkraftmaschine entstehen.

Bei weiteren bevorzugten Ausführungsformen ist vorgesehen, dass die Partikelaufladeeinrichtung eine Koronaelektrode zur Erzeugung einer Koronaentladung aufweist. Hierdurch können Ionen erzeugt werden, mittels denen die Partikel des Fluidstroms elektrisch aufgeladen werden, wodurch die elektrisch geladenen Partikel erhalten werden.

Bei weiteren bevorzugten Ausführungsformen ist vorgesehen, dass der Koronaelektrode eine Gegenelektrode, z.B. eine Masseelektrode, zugeordnet ist.

Bei weiteren bevorzugten Ausführungsformen ist vorgesehen, dass der Partikelsensor dazu ausgebildet ist, das Auswertungszeitfenster zusätzlich in Abhängigkeit von wenigstens einem, insbesondere geometrischen, Parameter des Partikelsensors zu ermitteln. Dadurch kann die Präzision weiter gesteigert werden.

Bei weiteren bevorzugten Ausführungsformen ist vorgesehen, dass der Partikelsensor dazu ausgebildet ist, die erste Größe und/oder den wenigstens einen, insbesondere geometrischen, Parameter des Partikelsensors von einer externen Einheit zu empfangen, beispielsweise von einem Steuergerät einer Brennkraftmaschine eines Kraftfahrzeugs, in dessen Abgastrakt der Partikelsensor eingebaut ist.

Bei weiteren bevorzugten Ausführungsformen ist vorgesehen, dass der Partikelsensor dazu ausgebildet ist, die erste Größe und/oder den wenigstens einen, insbesondere geometrischen, Parameter des Partikelsensors aus Konfigurationsinformationen zu ermitteln, die z.B. lokal in dem Partikelsensor bzw. in einer Auswerteeinrichtung des Partikelsensors zumindest zeitweise gespeichert sein können.

Bei weiteren bevorzugten Ausführungsformen ist vorgesehen, dass der Partikelsensor dazu ausgebildet ist, das Sensorsignal nach dem Influenzprinzip zu ermitteln. Beispielsweise kann die Sensoreinrichtung wenigstens eine optionale Sensorelektrode aufweisen, in die ein elektrisches Signal, insbesondere eine Spannung, induziert wird, wenn ein oder mehrere elektrisch geladene Partikel sich an der Sensorelektrode vorbeibewegen. In diesem Fall kann die induzierte Spannung beispielsweise das Sensorsignal repräsentieren.

Bei weiteren bevorzugten Ausführungsformen ist vorgesehen, dass der Partikelsensor dazu ausgebildet ist, das Sensorsignal nach dem escaping-current-Prinzip zu ermitteln. Bei diesen Ausführungsformen ist die vorstehend beschriebene Sensorelektrode entbehrlich. Zur Verwendung des "escaping current" - Prinzips zur Messung eines Ladungsstroms der geladenen Partikel kann bei weiteren bevorzugten Ausführungsformen das komplette, den Partikelsensor enthaltende, System nach außen isoliert werden (insbesondere wird hierdurch eine optionale Gegenelektrode einer Koronaelektrode "virtuell", beispielsweise eine virtuelle Masseelektrode), und es wird ein elektrischer Strom gemessen, welchen die geladenen Partikel in Form ihrer elektrischen Aufladung aus dem ansonsten elektrisch isolierten und daher geschlossenen System heraustragen. Beispielsweise fließt der betrachtete elektrische Strom von der Koronaelektrode durch die Koronaentladung in die Gegenelektrode, und eine bei weiteren bevorzugten Ausführungsformen optional vorhandene Trapelektrode zum Ablenken von geladenen Teilchen (insbesondere Ionen) des Fluidstroms fängt die übrigen Ionen ein. Der Strom, welcher von den geladenen Partikeln erzeugt wird, muss der Gegenelektrode wieder hinzugefügt werde, damit ihr elektrisches Potential konstant bleibt. Er wird als "escaping current" bezeichnet und ist ein Maß für die Konzentration von aufgeladenen Partikeln.

Bei weiteren bevorzugten Ausführungsformen kann das Sensorsignal auch nach einem anderen Prinzip als den vorstehend beispielhaft genannten Prinzipien der Influenz bzw. des escaping-current ermittelt werden.

Bei weiteren bevorzugten Ausführungsformen ist vorgesehen, dass der Partikelsensor dazu ausgebildet ist, eine Halbwertsbreite wenigstens eines Bereichs des Sensorsignals zu ermitteln. Dadurch kann die Genauigkeit des Verfahrens weiter gesteigert werden.

Weitere bevorzugte Ausführungsformen beziehen sich auf ein Verfahren zum Betreiben eines Partikelsensors mit einer Partikelaufladeeinrichtung zum Aufladen von Partikeln in einem Fluidstrom, und einer Sensoreinrichtung zur Erfassung eines zeitlichen Verlaufs eines Sensorsignals, das Informationen über aufgeladene Partikel in dem Fluidstrom aufweist, wobei der Partikelsensor ein Auswertungszeitfenster in Abhängigkeit wenigstens einer eine Geschwindigkeit des Fluidstroms charakterisierenden ersten Größe ermittelt und den zeitlichen Verlauf des Sensorsignals wenigstens in einem durch das Auswertungszeitfenster charakterisierten Zeitbereich auswertet.

Bei weiteren bevorzugten Ausführungsformen ist vorgesehen, dass der Partikelsensor das Auswertungszeitfenster zusätzlich in Abhängigkeit von wenigstens einem, insbesondere geometrischen, Parameter des Partikelsensors ermittelt.

Bei weiteren bevorzugten Ausführungsformen ist vorgesehen, dass der Partikelsensor die erste Größe und/oder den wenigstens einen, insbesondere geometrischen, Parameter des Partikelsensors a) von einer externen Einheit empfängt und/oder b) aus Konfigurationsinformationen ermittelt.

Bei weiteren bevorzugten Ausführungsformen ist vorgesehen, dass der Partikelsensor das Sensorsignal nach dem Influenzprinzip oder dem escaping-current-Prinzip ermittelt.

Bei weiteren bevorzugten Ausführungsformen ist vorgesehen, dass der Partikelsensor eine Halbwertsbreite wenigstens eines Bereichs des Sensorsignals ermittelt.

Weitere bevorzugte Ausführungsformen beziehen sich auf eine Verwendung des Partikelsensors gemäß den Ausführungsformen und/oder des Verfahrens gemäß den Ausführungsformen zur Ermittlung von Informationen bezüglich Partikeln in einem Abgasstrom einer Brennkraftmaschine, insbesondere eines Kraftfahrzeugs.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

In der Zeichnung zeigt:
- Figur 1: schematisch eine Seitenansicht eines Partikelsensors gemäß bevorzugten Ausführungsformen,
- Figur 2: schematisch die Anordnung des Partikelsensors gemäß Figur 1 in einem Zielsystem,
- Figur 3: schematisch eine Seitenansicht eines Partikelsensors gemäß weiteren bevorzugten Ausführungsformen,
- Figur 4: schematisch einen zeitlichen Verlauf von Betriebsgrößen eines Partikelsensors gemäß weiteren bevorzugten Ausführungsformen,
- Figur 5: schematisch ein vereinfachtes Flussdiagramm eines Verfahrens gemäß weiteren bevorzugten Ausführungsformen, und
- Figur 6: schematisch ein Blockdiagramm einer Auswerteeinrichtung gemäß weiteren bevorzugten Ausführungsformen.

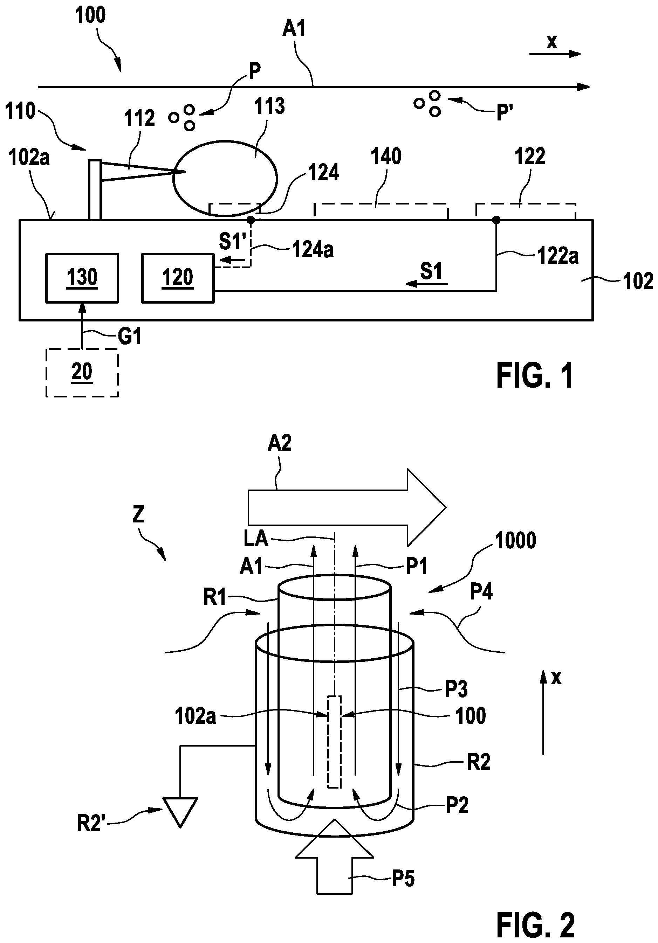

Figur 1 zeigt schematisch eine Seitenansicht eines Partikelsensors 100 gemäß bevorzugten Ausführungsformen. Der Partikelsensor 100 weist eine Partikelaufladeeinrichtung 110 zum elektrischen Aufladen von Partikeln P in einem Fluidstrom A1 auf, wodurch aufgeladene Partikel P' erhalten werden.

Beispielsweise kann es sich bei dem Fluidstrom A1 um einen Abgasstrom einer Brennkraftmaschine eines Kraftfahrzeugs handeln. Beispielsweise kann es sich bei den Partikeln P um Rußpartikel handeln, wie sie im Rahmen einer Verbrennung von Kraftstoff durch eine Brennkraftmaschine entstehen. Das Prinzip gemäß den Ausführungsformen kann sowohl zur Sensierung von als Festkörper ausgebildeten Partikeln (z.B. Rußpartikel, wie sie in einem Abgasstrom einer Brennkraftmaschine enthalten sind) als auch zur Sensierung von z.B. flüssigen Partikeln (z.B. Aerosol) verwendet werden.

Bei weiteren bevorzugten Ausführungsformen ist vorgesehen, dass die Partikelaufladeeinrichtung 110 eine Koronaelektrode 112 zur Erzeugung einer Koronaentladung 113 aufweist. Hierdurch können insbesondere im Bereich der Koronaentladung 113 Ionen erzeugt werden, mittels denen die Partikel P des Fluidstroms A1 elektrisch aufgeladen werden, wodurch die elektrisch geladenen Partikel P' erhalten werden.

Der Partikelsensor 100 weist ferner eine Sensoreinrichtung 120 zur Erfassung eines zeitlichen Verlaufs eines Sensorsignals S1, S1' auf, das Informationen über aufgeladene Partikel P' in dem Fluidstrom A1 aufweist. Bevorzugt ist der Partikelsensor 100 dazu ausgebildet, ein Auswertungszeitfenster in Abhängigkeit wenigstens einer eine Geschwindigkeit des Fluidstroms A1 charakterisierenden ersten Größe G1 zu ermitteln und den zeitlichen Verlauf des Sensorsignals S1, S1' wenigstens (oder, bei weiteren bevorzugten Ausführungsformen, nur) in einem durch das Auswertungszeitfenster charakterisierten Zeitbereich auszuwerten. Dadurch kann eine Präzision bei der Auswertung gesteigert werden und insbesondere ein Signal-zu-Rausch-Verhältnis (SNR) vergrößert werden. Insbesondere kann dadurch auch der Messbereich des Partikelsensors 100 erweitert werden, so dass kleinere Konzentrationen von Partikeln gemessen werden können. Durch die Betrachtung des Sensorsignals S1, S1' in dem durch das Auswertungszeitfenster charakterisierten Zeitbereich gemäß weiteren bevorzugten Ausführungsformen wird vorteilhaft vermieden, dass weniger relevante oder nicht relevante (Zeit-)Bereiche des Sensorsignals auch für die Auswertung berücksichtigt werden. Vielmehr können diese gezielt nicht für die Auswertung des Sensorsignals berücksichtigt werden.

Bei weiteren bevorzugten Ausführungsformen ist vorgesehen, dass der Koronaelektrode 112 eine Gegenelektrode 124, z.B. eine Masseelektrode 124, zugeordnet ist.

Bei weiteren bevorzugten Ausführungsformen ist vorgesehen, dass der Partikelsensor 100 dazu ausgebildet ist, das Auswertungszeitfenster zusätzlich in Abhängigkeit von wenigstens einem, insbesondere geometrischen, Parameter des Partikelsensors 100 zu ermitteln. Dadurch kann die Präzision weiter gesteigert werden.

Bei weiteren bevorzugten Ausführungsformen ist vorgesehen, dass der Partikelsensor 100 dazu ausgebildet ist, die erste Größe G1 und/oder den wenigstens einen, insbesondere geometrischen, Parameter des Partikelsensors 100 von einer externen Einheit 20 zu empfangen, beispielsweise von einem Steuergerät einer Brennkraftmaschine eines Kraftfahrzeugs, in dessen Abgastrakt der Partikelsensor 100 eingebaut ist.

Bei weiteren bevorzugten Ausführungsformen ist vorgesehen, dass der Partikelsensor 100 dazu ausgebildet ist, die erste Größe G1 und/oder den wenigstens einen, insbesondere geometrischen, Parameter des Partikelsensors 100 aus Konfigurationsinformationen zu ermitteln, die z.B. lokal in dem Partikelsensor 100 bzw. in einer Auswerteeinrichtung 130 des Partikelsensors 100 zumindest zeitweise gespeichert sein können.

Bei weiteren bevorzugten Ausführungsformen weist der Partikelsensor 100 die Auswerteeinrichtung auf 130, die beispielsweise zur Ausführung des Verfahrens gemäß den Ausführungsformen ausgebildet ist, insbesondere zur Ermittlung des Auswertungszeitfensters und zur Auswertung des zeitlichen Verlaufs des Sensorsignals S1, S1' in dem durch das Auswertungszeitfenster charakterisierten Zeitbereich.

Bei weiteren bevorzugten Ausführungsformen ist vorgesehen, dass der Partikelsensor 100 dazu ausgebildet ist, das Sensorsignal S1 nach dem Influenzprinzip zu ermitteln. Beispielsweise kann die Sensoreinrichtung 120 wenigstens eine optionale Sensorelektrode 122 (Fig. 1) aufweisen, in die ein elektrisches Signal, insbesondere eine Spannung, induziert wird, wenn ein oder mehrere elektrisch geladene Partikel P' sich entlang der in Fig. 1 horizontalen Koordinate x an der Sensorelektrode 122 vorbeibewegen. In diesem Fall kann die induzierte Spannung beispielsweise das Sensorsignal S1 repräsentieren. Das Sensorsignal S1 kann bei weiteren bevorzugten Ausführungsformen über eine Signalleitung 122a an die Sensoreinrichtung 120 weitergeleitet werden.

Bei weiteren bevorzugten Ausführungsformen ist vorgesehen, dass der Partikelsensor 100 dazu ausgebildet ist, das Sensorsignal S1' nach dem escaping-current-Prinzip zu ermitteln. Bei diesen Ausführungsformen ist die vorstehend beschriebene Sensorelektrode 122 entbehrlich. Zur Verwendung des "escaping current" - Prinzips zur Messung eines Ladungsstroms der geladenen Partikel P' kann bei weiteren bevorzugten Ausführungsformen das komplette, den Partikelsensor 100 enthaltende, System nach außen isoliert werden (insbesondere wird hierdurch eine optionale Gegenelektrode einer Koronaelektrode "virtuell", beispielsweise eine virtuelle Masseelektrode), und es wird ein elektrischer Strom gemessen, welchen die geladenen Partikel P' in Form ihrer elektrischen Aufladung aus dem ansonsten elektrisch isolierten und daher geschlossenen System heraustragen. Beispielsweise fließt der betrachtete elektrische Strom von der Koronaelektrode 112 durch die Koronaentladung 113 in die Gegenelektrode 124, und eine bei weiteren bevorzugten Ausführungsformen optional vorhandene Trapelektrode 140 zum Ablenken von geladenen Teilchen (insbesondere Ionen) des Fluidstroms A1 fängt die übrigen Ionen ein. Der Strom, welcher von den geladenen Partikeln P' erzeugt wird, muss der Gegenelektrode 124 wieder hinzugefügt werden, damit ihr elektrisches Potential konstant bleibt. Er wird als "escaping current" bezeichnet, entspricht vorliegend dem Signal S1', und ist ein Maß für die Konzentration der aufgeladenen Partikel P'. Das Sensorsignal S1' kann bei weiteren bevorzugten Ausführungsformen über eine Signalleitung 124a an die Sensoreinrichtung 120 weitergeleitet werden.

Bei weiteren bevorzugten Ausführungsformen kann das Sensorsignal S1, S1' auch nach einem anderen Prinzip als den vorstehend beispielhaft genannten Prinzipien der Influenz bzw. des escaping-current ermittelt werden.

Bei weiteren bevorzugten Ausführungsformen ist vorgesehen, dass der Partikelsensor 100 dazu ausgebildet ist, eine Halbwertsbreite (englisch: FWHM, "full width at half maximum") wenigstens eines Bereichs des Sensorsignals S1, S1' zu ermitteln. Dadurch kann die Genauigkeit des Verfahrens weiter gesteigert werden.

Bei weiteren bevorzugten Ausführungsformen ist vorgesehen, dass die Partikelaufladeeinrichtung 110 (Fig. 1) und/oder die Koronaelektrode 112 und/oder wenigstens eine Komponente 122, 124 der Sensoreinrichtung 120 auf einem elektrisch nicht leitenden Trägerelement 102 (z.B. Keramiksubstrat, beispielsweise i.w. planar ausgebildet, vgl. Fig. 1) angeordnet ist, wobei z.B. mehrere der genannten Elemente auf einer ersten Oberfläche 102a des Trägerelements 102 angeordnet sind. Wie aus Fig. 1 ersichtlich ist, bezüglich einer Strömungsrichtung x des Fluidstroms A1, stromaufwärts die Koronaelektrode 112 angeordnet, stromabwärts hiervon kann bei weiteren bevorzugten Ausführungsformen ggf. eine optionale Trapelektrode 140 vorgesehen sein, die zum Ablenken geladener Teilchen (z.B. Ionen) der Fluidströmung A1 vorgesehen ist. Stromabwärts der optionalen Trapelektrode 140 ist wie aus Fig. 1 ersichtlich die Sensoreinrichtung 120 bzw. ihre Sensorelektrode 122 angeordnet. Bei weiteren bevorzugten Ausführungsformen sind auch andere Topologien als die beispielhaft in Fig. 1 gezeigte Topologie des Partikelsensors 100 möglich.

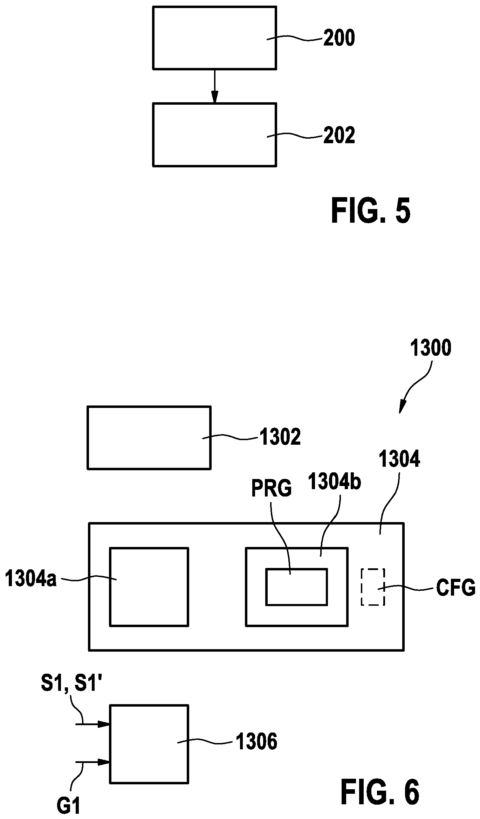

Weitere bevorzugte Ausführungsformen beziehen sich auf ein Verfahren zum Betreiben des Partikelsensors 100, vgl. das Flussdiagramm gemäß Figur 5, wonach der Partikelsensor 100 (Fig. 1) ein Auswertungszeitfenster in Abhängigkeit wenigstens einer eine Geschwindigkeit des Fluidstroms charakterisierenden ersten Größe G1 ermittelt, vgl. Schritt 200 von Fig. 5, und den zeitlichen Verlauf des Sensorsignals S1 wenigstens in einem durch das Auswertungszeitfenster charakterisierten Zeitbereich auswertet, vgl. Schritt 202 von Fig. 5.

Figur 2 zeigt schematisch die Anordnung des Partikelsensors 100 gemäß Figur 1 in einem Zielsystem Z, bei dem es sich vorliegend um einen Abgastrakt einer Brennkraftmaschine beispielsweise eines Kraftfahrzeugs handelt. Eine Abgasströmung ist vorliegend mit dem Bezugszeichen A2 bezeichnet. Ebenfalls abgebildet ist eine Schutzrohranordnung 1000 aus zwei zueinander konzentrisch angeordneten Rohren R1, R2, wobei der Partikelsensor 100 so in dem inneren Rohr R1 angeordnet ist, dass seine erste Oberfläche 102a im Wesentlichen parallel zu einer Längsachse LA des inneren Rohres R1 verläuft. Aufgrund der unterschiedlichen Längen und der Anordnung der Rohre R1, R2 relativ zu einander ergibt sich bei weiteren bevorzugten Ausführungsformen durch den Venturi-Effekt ein Sog, bei dem die Abgasströmung A2 eine Fluidströmung P1 bzw. A1 aus dem inneren Rohr R1 heraus in Figur 2 in vertikaler Richtung nach oben bewirkt. Die weiteren Pfeile P2, P3, P4 deuten die Fortsetzung dieser durch den Venturi-Effekt bewirkten Fluidströmung durch einen Zwischenraum zwischen den beiden Rohren R1, R2 hindurch zur Umgebung der Schutzrohranordnung hin an. Insgesamt wird durch die in Figur 2 abgebildete Anordnung eine vergleichsweise gleichmäßige Überströmung des Partikelsensors 100 bzw. dessen entlang der Fluidströmung P1 ausgerichteter erster Oberfläche 102a bewirkt (insbesondere im Sinne einer laminaren Strömung), was eine effiziente Erfassung von in der Fluidströmung A1, P1 befindlichen Partikeln ermöglicht. Darüber hinaus wird der Partikelsensor 100 vor einem direkten Kontakt mit dem Haupt-Abgasstrom A2 geschützt.

Das Bezugszeichen R2' deutet eine optionale elektrische Verbindung des äußeren Rohres R2 und/oder des inneren Rohres R1 mit einem Bezugspotenzial wie beispielsweise dem Massepotenzial an, sodass das betreffende Rohr bzw. beide Rohre vorteilhaft gleichzeitig zu ihrer fluidischen Leitfunktion als elektrische Gegenelektrode beispielsweise für die Koronaelektrode 112 und/oder die optionale Trapelektrode 140, vergleiche Figur 1, verwendbar sind.

Der Blockpfeil P5 in Figur 2 symbolisiert eine optionale Frischgasversorgung, insbesondere Frischluftversorgung, die in manchen Ausführungsformen erwünscht sein kann, bei besonders bevorzugten Ausführungsformen jedoch nicht vorgesehen ist.

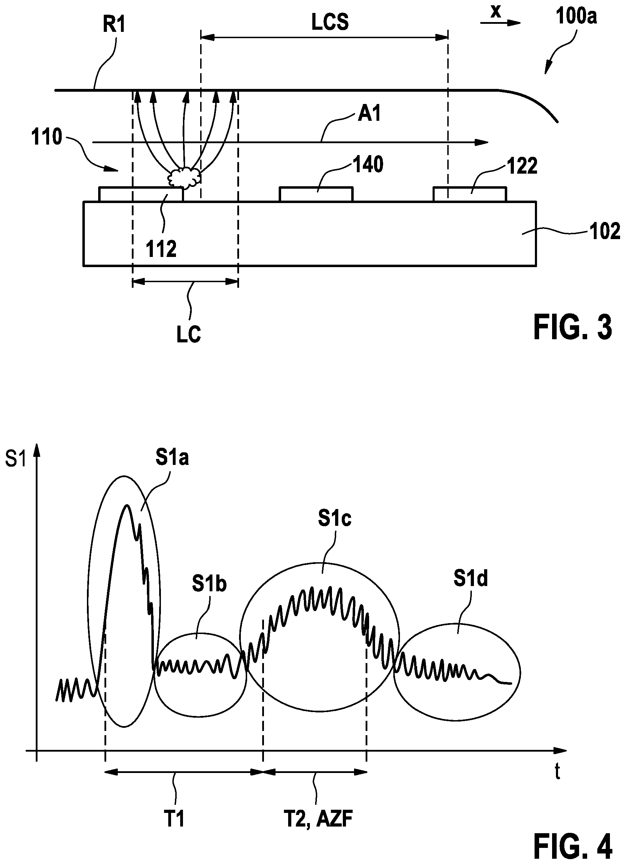

Figur 3 zeigt schematisch eine Seitenansicht eines Partikelsensors 100a gemäß weiteren bevorzugten Ausführungsformen. Vorliegend bildet das Rohr R1 eine Gegenelektrode (z.B. aufweisend ein Massepotential) zu der Koronaelektrode 112 der Partikelaufladeeinrichtung 110.

Weiteren bevorzugten Ausführungsformen liegt die Beobachtung zugrunde, dass in dem Fluidstrom A1 enthaltene Partikel P, P' (Fig. 1) eine bestimmte Flugzeit T1 (Fig. 4) von dem Aufladungsbereich um die Koronaelektrode 112 herum zu der Sensorelektrode 122 haben, welche von der Sensorgeometrie des Partikelsensors 100a (Flugstrecke) und von einer aktuellen Abgasgeschwindigkeit des Fluidstroms A1, insbesondere in dem Rohr R1, abhängt. Zusätzlich kann die Größe bzw. die Länge (entlang Koordinate x) einer durch die Koronaentladung 113 erzeugten aufgeladenen "Partikelwolke" von der Größe LC der Aufladungszone (elektrisches Feld der Koronaelektrode 112) und/oder von der Abgasgeschwindigkeit und ggf. auch von einer Dauer eines Pulses der Koronaentladung (bei gepulster Ansteuerung der Koronaelektrode 112) abhängen. Ein Abstand LCS zwischen der Koronaelektrode 112 und der Sensorelektrode 122 kann bei weiteren Ausführungsformen ebenfalls einen Einfluss z.B. auf die genannten Flugzeit T1 haben. Damit ergibt sich bei weiteren bevorzugten Ausführungsformen auch eine Abhängigkeit des Halbwertsbreite, FWHM, des Sensorsignals S1 (Fig. 4) von diesen drei Parametern und ggf. von der Länge der Sensorelektrode 122 (entlang der horizontalen Koordinate x). Diese Zusammenhänge sind in Fig. 3 und 4 beispielhaft dargestellt.

Die Abgasgeschwindigkeit im Rohr R1 (Fig. 3) hängt bei weiteren bevorzugten Ausführungsformen von der Abgasflussrate im Hauptabgasrohr (vgl. Blockpfeil A2 aus Fig. 2) ab, welche z.B. in Form der ersten Größe G1 (Fig. 1) als Information von dem Steuergerät 20 erhalten werden kann. Die anderen (insbesondere geometrischen) Parameter LC, LCS sind aus dem Sensordesign bekannt. Es ist daher bei weiteren bevorzugten Ausführungsformen möglich, (ggf. nach entsprechender Applikation für ein bestimmtes Zielsystem 1000 (Fig. 2)) das FWHM und/oder die zeitliche Position des Partikelladungssignals S1c zu einem bestimmten Zeitbereich T2 vorherzusagen bzw. zu ermitteln. Neben den interessierenden Informationen über die geladenen Partikel P' (Fig. 1) in dem Signalbereich S1c weist das Sensorsignal S1 (Fig. 1) auch andere Informationen auf, nämlich ggf. Informationen über ein Zünden der Koronaentladung 113 (Fig. 1), das in das Sensorsignal S1 einkoppeln kann, vgl. den Signalbereich S1a aus Fig. 4, oder Hintergrundrauschen, vgl. die weiteren Signalbereiche S1b, S1d.

Vorteilhaft kann unter Anwendung des Prinzips gemäß den Ausführungsformen das Auswertungszeitfenster AZF in Abhängigkeit von der ersten Größe G1 (Fig. 1) und/oder von einem oder mehreren insbesondere geometrischen Parametern LC, LCS (Fig. 3) des Partikelsensors 100, 100a ermittelt werden. In dem durch das Auswertungszeitfenster AZF charakterisierten Zeitbereich T2 des zeitlichen Verlaufs des Sensorsignals S1 (Fig. 4) sind primär die interessierenden Informationen über die geladenen Partikel P' enthalten, nicht bzw. nicht wesentlich jedoch andere Informationen bzw. ein Rauschen.

Der Zeitbereich T1 in Fig. 1 charakterisiert die von der ersten Größe G1 und dem Abstand LCS (Fig. 3) abhängige Flugzeit geladener Partikel P' von der Koronaelektrode 112 zu der Sensorelektrode 122.

Bei weiteren bevorzugten Ausführungsformen kann eine zeitliche Intervallbreite T2 und eine zeitliche Position, in denen man das interessierende Sensorsignal S1 mit dem erwarteten Hintergrundsignal vergleicht und ggf. über eine Detektion oder Nicht-Detektion und/oder eine Größe einer Partikelkonzentration entscheidet, auf die aus der aktuellen Geschwindigkeit des Abgases (Größe G1) und den relevanten geometrischen Parametern des Sensors erwartete bzw. berechnete Position und Halbwertsbreite (FWHM) des Partikelladungssignals S1 angepasst werden, vgl. den Signalbereich S1c.

Bei weiteren bevorzugten Ausführungsformen können die Größen "time of flight", entsprechend dem ersten Zeitbereich T1, "signal width", entsprechend dem zweiten Zeitbereich T2 aus einem entsprechenden Sensormodell für den Partikelsensor 100, 100a ermittelt werden.

Bei weiteren bevorzugten Ausführungsformen kann unter Kenntnis des Auswertungszeitfensters AZF (nach Schritt 200 von Fig. 5) eine Auswertung (Schritt 202 von Fig. 5) beispielsweise derart erfolgen, dass ein Zeitintegral des Sensorsignals S1 innerhalb des durch das Auswertungszeitfenster AZF charakterisierten Zeitbereichs gebildet wird ("gesammeltes Signal").

Bei weiteren bevorzugten Ausführungsformen können Informationen über den Beginn des ersten Zeitbereichs T1 beispielsweise aus einem z.B. in der Auswerteeinrichtung 130 bekannten Ansteuersignal für die Koronaelektrode 112 ermittelt werden, als auch aus dem in dem Sensorsignal S1 in dem Signalbereich S1a vorhandenen Impuls, der auf einen Korona-Zündimpuls zurückgeht.

Figur 6 zeigt schematisch ein Blockdiagramm einer Auswerteeinrichtung 1300 gemäß weiteren bevorzugten Ausführungsformen. Beispielsweise kann die Auswerteeinrichtung 130 aus Fig. 1 die nachstehend unter Bezugnahme auf Fig. 6 beschriebene Konfiguration aufweisen.

Die Auswerteeinrichtung 1300 (Fig. 6) weist wenigstens eine Recheneinrichtung 1302 auf, wenigstens eine der Recheneinrichtung 1302 zugeordnete Speichereinrichtung 1304 zur zumindest zeitweisen Speicherung eines Computerprogramms PRG und/oder von Konfigurationsinformationen CFG, wobei das Computerprogramm PRG insbesondere zur Steuerung eines Betriebs der Auswerteeinrichtung 1300 und/oder des Partikelsensors 100, 100a ausgebildet ist, und wobei die Konfigurationsinformationen CFG beispielsweise einen oder mehrere der insbesondere geometrischen Parameter LC, LCS (Fig. 3) charakterisieren.

Bei weiteren bevorzugten Ausführungsformen weist die Recheneinrichtung 1302 (Fig. 6) wenigstens eines der folgenden Elemente auf: einen Mikroprozessor, einen Mikrocontroller, einen digitalen Signalprozessor (DSP), einen programmierbaren Logikbaustein (z.B. FPGA, field programmable gate array), einen ASIC (anwendungsspezifischen integrierten Schaltkreis), eine Hardwareschaltung. Kombinationen hieraus sind bei weiteren bevorzugten Ausführungsformen auch denkbar.

Bei weiteren bevorzugten Ausführungsformen weist die Speichereinrichtung 1304 wenigstens eines der folgenden Elemente auf: einen flüchtigen Speicher 1304a, insbesondere Arbeitsspeicher (RAM), einen nichtflüchtigen Speicher 1304b, insbesondere Flash-EEPROM. Bevorzugt ist das Computerprogramm PRG in dem nichtflüchtigen Speicher 1304b abgelegt.

Bei weiteren bevorzugten Ausführungsformen weist die Auswerteeinrichtung 1300 einen Schnittstelle 1306 zum Empfang des Sensorsignals S1, S1' (und optional der ersten Größe G1) auf, wobei die Schnittstelle 1306 beispielsweise auch einen Analog/Digital-Wandler (ADC) aufweisen kann, um das bzw. die Sensorsignale S1, S1' in zeit- und wertediskrete Repräsentationen dieser Signale zu transformieren, beispielsweise um die Auswertung usw. nach den Schritten 200, 202 (Fig. 5) mittels des Computerprogramms PRG (Fig. 6) auszuführen.

Weitere bevorzugte Ausführungsformen beziehen sich auf eine Verwendung des Partikelsensors gemäß den Ausführungsformen und/oder des Verfahrens gemäß den Ausführungsformen zur Ermittlung von Informationen bezüglich Partikeln in einem Abgasstrom einer Brennkraftmaschine, insbesondere eines Kraftfahrzeugs.

Nachstehend sind weitere bevorzugte Ausführungsformen und Aspekte beschrieben.

Bei manchen Typen von Partikelsensoren, speziell bei solchen Sensoren für Brennkraftmaschinen, die ohne kontrollierte Fluidstromzuführung bzw. Abgaszuführung betrieben werden, z.B. ohne eine Druckluft-Ejektorpumpe, ist der Abgasvolumenstrom im Sensor von äußeren Parametern abhängig, wie z.B. einem Kurbelwinkel, der Motordrehzahl, der Last, dem Besatz eines Partikelfilters oder der Temperatur. Demensprechend ist der Volumenstrom zeitlich variabel und unterliegt starken Schwankungen. Zusätzlich kann auch die Partikelkonzentration stark variieren. Dadurch kann das Sensorsignal S1 bei konventionellen Systemen sehr stark variieren, wodurch der Sensor und insbesondere ein Ladungsverstärker (z.B. der Sensoreinrichtung 120, der das Sensorsignal S1 verarbeitet), einen sehr großen dynamischen Bereich aufweisen müssen. Insbesondere ist die Messung bei kleinen Partikelkonzentrationen und Abgasgeschwindigkeiten aufgrund der kleinen Signalpegel herausfordernd. Diese Schwierigkeiten bzw. Nachteile mancher Systeme werden bei weiteren bevorzugten Ausführungsformen vermindert bzw. vermieden.

Das Prinzip gemäß den Ausführungsformen ermöglicht eine optimierte Signalauswertung, welche z.B. die Information bzgl. einer aktuellen Abgasgeschwindigkeit (z.B. in Form der ersten Größe G1, z.B. erhalten von dem Steuergerät 20) nutzt, um das SNR des Sensorsignals S1 bzw. eines durch Auswertung daraus abgeleiteten Signals (z.B. Signalbereich S1c aus Fig. 4) zu maximieren.

Weitere bevorzugte Ausführungsformen ermöglichen es insbesondere, den Einfluss von geschwindigkeitsabhängigen Effekten in der Partikelkonzentrationsmessung zu minimieren oder sogar zu nutzen, um den Messbereich des Sensors zu erweitern, insbesondere für kleine Konzentrationen. Dadurch können bei manchen bevorzugten Ausführungsformen ein oder mehrere wesentliche Nachteile reduziert bzw. minimiert werden. Diese sind im Wesentlichen: a) Abhängigkeit des Sensorsignals S1, S1' von der Abgasgeschwindigkeit im Sensor, b) geringes SNR des Sensorsignals S1, S1' bei geringen Partikelkonzentrationen.

Weitere bevorzugte Ausführungsformen ermöglichen die Verwendung einer optimierten und abgasgeschwindigkeitsgesteuerten (Größe G1) Signalauswertung, welche bevorzugt zu einer Verbesserung des SNRs des Sensorsignals S1, S1 bzw. eines daraus abgeleiteten Signals (z.B. Signalbereich S1c aus Fig. 4) führt und damit die zuverlässige Messung auch von kleinen Partikelkonzentrationen ermöglicht.

Weitere bevorzugte Ausführungsformen erlauben eine gezielte und starke Erhöhung der Koronaentladung 113 (Fig. 1) (z.B. durch Erhöhung der Koronaspannung und/oder des Koronastroms), insbesondere bei geringen Konzentration von geladenen Partikeln P', wodurch diese genauer vermessen werden können. Dabei wird dies bei weiteren bevorzugten Ausführungsformen bevorzugt dann gemacht, wenn es notwendig ist (z.B. bei Unterschreitung eines vorgebbaren Schwellwerts für eine präzise messbare kleine Partikelkonzentration) , wodurch die Lebensdauer der Koronaelektrode 112 steigt.

Weitere bevorzugte Ausführungsformen weisen wenigstens einen der folgenden Vorteile auf: Messbereich des Sensors wird erweitert, die untere Nachweisgrenze für geladene Partikel P' wird nach unten verschoben (Empfindlichkeitssteigerung), kostengünstig, da wenig/keine Zusatzhardware erforderlich.

## Patentansprüche

1. Partikelsensor (100; 100a) mit einer Partikelaufladeeinrichtung (110) zum Aufladen von Partikeln (P) in einem Fluidstrom (A1), und einer Sensoreinrichtung (120) zur Erfassung eines zeitlichen Verlaufs eines Sensorsignals (S1; S1'), das Informationen über aufgeladene Partikel (P') in dem Fluidstrom (A1) aufweist, **dadurch gekennzeichnet, dass** der Partikelsensor (100; 100a) dazu ausgebildet ist, ein Auswertungszeitfenster (AZF) in Abhängigkeit wenigstens einer eine Geschwindigkeit des Fluidstroms (A1) charakterisierenden ersten Größe (G1) zu ermitteln (200) und den zeitlichen Verlauf des Sensorsignals (S1; S1') wenigstens in einem durch das Auswertungszeitfenster (AZF) charakterisierten Zeitbereich (T2) auszuwerten (202).

2. Partikelsensor (100; 100a) nach Anspruch 1, wobei der Partikelsensor (100; 100a) dazu ausgebildet ist, das Auswertungszeitfenster (AZF) zusätzlich in Abhängigkeit von wenigstens einem, insbesondere geometrischen, Parameter (LC, LCS) des Partikelsensors (100; 100a) zu ermitteln.

3. Partikelsensor (100; 100a) nach wenigstens einem der vorstehenden Ansprüche, wobei der Partikelsensor (100; 100a) dazu ausgebildet ist, die erste Größe (G1) und/oder den wenigstens einen, insbesondere geometrischen, Parameter (LC, LCS) des Partikelsensors (100; 100a) a) von einer externen Einheit (20) zu empfangen und/oder b) aus Konfigurationsinformationen (CFG) zu ermitteln.

4. Partikelsensor (100; 100a) nach wenigstens einem der vorstehenden Ansprüche, wobei der Partikelsensor (100; 100a) dazu ausgebildet ist, das Sensorsignal (S1; S1') nach dem Influenzprinzip oder dem escaping-current-Prinzip zu ermitteln.

5. Partikelsensor (100; 100a) nach wenigstens einem der vorstehenden Ansprüche, wobei der Partikelsensor (100; 100a) dazu ausgebildet ist, eine Halbwertsbreite wenigstens eines Bereichs (S1c) des Sensorsignals (S1; S1') zu ermitteln.

6. Verfahren zum Betreiben eines Partikelsensors (100; 100a) mit einer Partikelaufladeeinrichtung (110) zum Aufladen von Partikeln (P) in einem Fluidstrom (A1), und einer Sensoreinrichtung (120) zur Erfassung eines zeitlichen Verlaufs eines Sensorsignals (S1; S1'), das Informationen über aufgeladene Partikel (P') in dem Fluidstrom (A1) aufweist, **dadurch gekennzeichnet, dass** der Partikelsensor (100; 100a) ein Auswertungszeitfenster (AZF) in Abhängigkeit wenigstens einer eine Geschwindigkeit des Fluidstroms (A1) charakterisierenden ersten Größe (G1) ermittelt (200) und den zeitlichen Verlauf des Sensorsignals (S1; S1') wenigstens in einem durch das Auswertungszeitfenster (AZF) charakterisierten Zeitbereich auswertet (202).

7. Verfahren nach Anspruch 6, wobei der Partikelsensor (100; 100a) das Auswertungszeitfenster (AZF) zusätzlich in Abhängigkeit von wenigstens einem, insbesondere geometrischen, Parameter (LC, LCS) des Partikelsensors (100; 100a) ermittelt.

8. Verfahren nach wenigstens einem der Ansprüche 6 bis 7, wobei der Partikelsensor (100; 100a) die erste Größe (G1) und/oder den wenigstens einen, insbesondere geometrischen, Parameter (LC, LCS) des Partikelsensors (100; 100a) a) von einer externen Einheit (20) empfängt und/oder b) aus Konfigurationsinformationen (CFG) ermittelt.

9. Verfahren nach wenigstens einem der Ansprüche 6 bis 8, wobei der Partikelsensor (100; 100a) das Sensorsignal (S1; S1') nach dem Influenzprinzip oder dem escaping-current-Prinzip ermittelt.

10. Verfahren nach wenigstens einem der Ansprüche 6 bis 9, wobei der Partikelsensor (100; 100a) eine Halbwertsbreite wenigstens eines Bereichs des Sensorsignals (S1; S1') ermittelt.

11. Verwendung des Partikelsensors (100; 100a) nach wenigstens einem der Ansprüche 1 bis 5 und/oder des Verfahrens nach wenigstens einem der Ansprüche 6 bis 10 zur Ermittlung von Informationen bezüglich Partikeln (P, P') in einem Abgasstrom (A1) einer Brennkraftmaschine, insbesondere eines Kraftfahrzeugs.

## Claims

1. Particle sensor (100; 100a) comprising a particle charging device (110) for charging particles (P) in a fluid flow (A1), and a sensor device (120) for detecting a temporal profile of a sensor signal (S1; S1') having information about charged particles (P') in the fluid flow (A1), **characterized in that** the particle sensor (100; 100a) is configured to determine (200) an evaluation time window (AZF) depending on at least one first variable (G1) characterizing a velocity of the fluid flow (A1) and to evaluate (202) the temporal profile of the sensor signal (S1; S1') at least in a time range (T2) **characterized by** the evaluation time window (AZF) .

2. Particle sensor (100; 100a) according to Claim 1, wherein the particle sensor (100; 100a) is configured to determine the evaluation time window (AZF) additionally depending on at least one, in particular geometric, parameter (LC, LCS) of the particle sensor (100; 100a).

3. Particle sensor (100; 100a) according to at least one of the preceding claims, wherein the particle sensor (100; 100a) is configured a) to receive the first variable (G1) and/or the at least one, in particular geometric, parameter (LC, LCS) of the particle sensor (100; 100a) from an external unit (20) and/or b) to determine them/it from configuration information (CFG).

4. Particle sensor (100; 100a) according to at least one of the preceding claims, wherein the particle sensor (100; 100a) is configured to determine the sensor signal (S1; S1') according to the electrostatic induction principle or the escaping current principle.

5. Particle sensor (100; 100a) according to at least one of the preceding claims, wherein the particle sensor (100; 100a) is configured to determine a full width at half maximum of at least one region (S1c) of the sensor signal (S1; S1').

6. Method for operating a particle sensor (100; 100a) comprising a particle charging device (110) for charging particles (P) in a fluid flow (A1), and a sensor device (120) for detecting a temporal profile of a sensor signal (S1; S1') having information about charged particles (P') in the fluid flow (A1), **characterized in that** the particle sensor (100; 100a) determines (200) an evaluation time window (AZF) depending on at least one first variable (G1) characterizing a velocity of the fluid flow (A1) and evaluates (202) the temporal profile of the sensor signal (S1; S1') at least in a time range **characterized by** the evaluation time window (AZF).

7. Method according to Claim 6, wherein the particle sensor (100; 100a) determines the evaluation time window (AZF) additionally depending on at least one, in particular geometric, parameter (LC, LCS) of the particle sensor (100; 100a).

8. Method according to at least one of Claims 6 to 7, wherein the particle sensor (100; 100a) a) receives the first variable (G1) and/or the at least one, in particular geometric, parameter (LC, LCS) of the particle sensor (100; 100a) from an external unit (20) and/or b) determines them/it from configuration information (CFG).

9. Method according to at least one of Claims 6 to 8, wherein the particle sensor (100; 100a) determines the sensor signal (S1; S1') according to the electrostatic induction principle or the escaping current principle.

10. Method according to at least one of Claims 6 to 9, wherein the particle sensor (100; 100a) determines a full width at half maximum of at least one region of the sensor signal (S1; S1').

11. Use of the particle sensor (100; 100a) according to at least one of Claims 1 to 5 and/or of the method according to at least one of Claims 6 to 10 for determining information with regard to particles (P, P') in an exhaust gas flow (A1) of an internal combustion engine, in particular of a motor vehicle.

## Revendications

1. Capteur de particules (100 ; 100a) comprenant un dispositif de chargement de particules (110) destiné à charger des particules (P) dans un écoulement de fluide (A1), et un dispositif de détection (120) destiné à détecter une variation dans le temps d'un signal de détection (S1 ; S1') qui contient des informations sur les particules chargées (P') dans l'écoulement de fluide (A1), **caractérisé en ce que** le capteur de particules (100 ; 100a) est conçu pour déterminer une fenêtre d'évaluation temporelle (AZF) en fonction d'au moins une première grandeur (G1) caractérisant une vitesse de l'écoulement de fluide (A1) (200) et pour évaluer (202) la variation dans le temps du signal de détection (S1 ; S1') au moins dans une plage de temps (T2) **caractérisée par** la fenêtre d'évaluation temporelle (AZF).

2. Capteur de particules (100 ; 100a) selon la revendication 1, le capteur de particules (100 ; 100a) étant conçu pour déterminer la fenêtre d'évaluation temporelle (AZF) en plus en fonction d'au moins un paramètre, en particulier géométrique, (LC, LCS) du capteur de particules (100 ; 100a).

3. Capteur de particules (100; 100a) selon l'une au moins des revendications précédentes, le capteur de particules (100; 100a) étant conçu pour recevoir la première grandeur (G1) et/ou l'au moins un paramètre, en particulier géométrique, (LC, LCS) du capteur de particules (100 ; 100a) a) d'une unité extérieure (20) et/ou b) les déterminer à partir d'informations de configuration (CFG).

4. Capteur de particules (100 ; 100a) selon l'une au moins des revendications précédentes, le capteur de particules (100 ; 100a) étant conçu pour déterminer le signal de capteur (S1; S1') selon le principe d'induction ou le principe du courant de fuite.

5. Capteur de particules (100 ; 100a) selon l'une au moins des revendications précédentes, le capteur de particules (100 ; 100a) étant conçu pour déterminer une largeur en demi-valeur d'au moins une zone (S1c) du signal de détection (S1 ; S1').

6. Procédé de fonctionnement d'un capteur de particules (100 ; 100a) comprenant un dispositif de chargement de particules (110) destiné à charger des particules (P) dans un écoulement de fluide (A1), et un dispositif de capteur (120) destiné à détecter une variation temporelle d'un signal de détection (S1 ; S1') qui contient des informations sur les particules chargées (P') dans le flux de fluide (A1), **caractérisé en ce que** le capteur de particules (100 ; 100a) détermine (200) une fenêtre d'évaluation temporelle (AZF) en fonction d'au moins une première grandeur (G1) et évalue (202) la variation temporelle du signal de détection (S1 ; S1') au moins dans une plage de temps **caractérisée par** la fenêtre d'évaluation temporelle (AZF) .

7. Procédé selon la revendication 6, le capteur de particules (100 ; 100a) déterminant la fenêtre d'évaluation temporelle (AZF) en plus en fonction d'au moins un paramètre, en particulier géométrique, (LC, LCS) du capteur de particules (100 ; 100a).

8. Procédé selon l'une au moins des revendications 6 à 7, le capteur de particules (100 ; 100a) recevant la première grandeur (G1) et/ou l'au moins un paramètre, en particulier géométrique, (LC, LCS) du capteur de particules (100 ; 100a) a) d'une unité extérieure (20) et/ou b) les déterminant à partir d'informations de configuration (CFG).

9. Procédé selon l'une au moins des revendications 6 à 8, le capteur de particules (100 ; 100a) déterminant le signal de détection (S1 ; S1') selon le principe d'induction ou le principe du courant de fuite.

10. Procédé selon l'une au moins des revendications 6 à 9, le capteur de particules (100 ; 100a) déterminant une largeur en demi-valeur d'au moins une zone du signal de détection (S1 ; S1').

11. Utilisation du capteur de particules (100 ; 100a) selon l'une au moins des revendications 1 à 5 et/ou du procédé selon l'une au moins des revendications 6 à 10 pour déterminer des informations sur les particules (P, P') dans un flux de gaz d'échappement (A1) d'un moteur à combustion interne, notamment d'un véhicule automobile.
